Europäisches Patentamt

European Patent Office

Office européen des brevets

(19)

(11)  **EP 1 043 783 A1**

(12)  **EUROPEAN PATENT APPLICATION**
published in accordance with Art. 158(3) EPC

(43) Date of publication:
**11.10.2000 Bulletin 2000/41**

(51) Int. Cl.$^7$: **H01M 2/02**, H01M 2/08,
H01M 10/40

(21) Application number: **99949332.3**

(22) Date of filing: **20.10.1999**

(86) International application number:
**PCT/JP99/05799**

(87) International publication number:
**WO 00/25373 (04.05.2000 Gazette 2000/18)**

(84) Designated Contracting States:
**AT BE CH CY DE DK ES FI FR GB GR IE IT LI LU
MC NL PT SE**

(30) Priority: **23.10.1998 JP 30308598**

(71) Applicant: **Sony Corporation
Tokyo 141-0001 (JP)**

(72) Inventors:
• **HATTA , Kazuhito
Shinagawa-ku, Tokyo 141-0001 (JP)**

• **HATAZAWA, Tsuyonobu
Shinagawa-ku, Tokyo 141-0001 (JP)**
• **HARA, Tomitaro
Shinagawa-ku, Tokyo 141-0001 (JP)**

(74) Representative:
**Müller, Frithjof E., Dipl.-Ing. et al
Patentanwälte
MÜLLER & HOFFMANN,
Innere Wiener Strasse 17
81667 München (DE)**

(54)  **NONAQUEOUS ELECTROLYTE CELL**

(57)    A nonaqueous-electrolyte battery which is capable of preventing introduction of water and deterioration in the capacity thereof is disclosed. The nonaqueous-electrolyte battery according to the present invention incorporates a case constituted by laminated films; and a unit cell which is accommodated in the case and having a structure that the peripheries of the case is sealed with heat, wherein when an assumption is made that the quantity of water capable of penetrating a heat-weld resin layer which is the innermost layer of the case having a thickness of T ($\mu$m) is R (g/m$^2 \cdot$ day), the cross sectional area of resin in a heat-sealed portion is S (cm$^2$), an average width of the heat-sealed portion is W (cm) and the capacity of the unit cell is C (Wh), the following relationship is satisfied: (T $\times$ R $\times$ S)/(W $\times$ C) $\leq$ 0.96 $\mu$g/Wh $\cdot$ day . When the foregoing structure is employed, water introducing rate can be reduced to 350 $\mu$g/year or lower per capacity (Wh).

**FIG.4**

EP 1 043 783 A1

## Description

Technical Field

The present invention relates to a nonaqueous-electrolyte battery incorporating a case constituted by laminated films in which a unit cell is accommodated.

Background Art

In recent year, a variety of portable electronic apparatuses represented by a notebook personal computer have been structured into cordless and portable forms. Thus, a variety of small thickness, compact size and light weight portable electronic apparatuses have sequentially been developed. Since the apparatuses have considerably varied, the quantity of electric power which is required for the apparatuses has been enlarged. Hence it follows that batteries which are energy sources for the apparatuses, in particular, secondary batteries are required to have larger capacities.

As conventional secondary batteries, lead batteries and nickel-cadmium batteries have been known. Moreover, new secondary batteries, such as nickel-hydrogen batteries and lithium-ion batteries, have been put into practical use. The foregoing secondary batteries each of which incorporates solution to serve as the electrolyte thereof, however, suffer from a problem of leakage of liquid.

To solve the above-mentioned problem, a polymer lithium-ion secondary battery incorporating polymer gel swelled by the electrolytic solution and serving as the electrolyte has been developed. Since the polymer lithium-ion battery has been developed, the problem of the leakage of the solution from the battery can be prevented. Thus, a small size, light weight, small thickness and high energy-density secondary battery can be realized.

The structure of the polymer lithium-ion secondary battery will now be described. A collector for the positive electrode made of a thin aluminum plate incorporates active materials composed of $LiCoO_2$ and graphite and laminated thereon. Moreover, active materials composed of carbon, cokes, graphite and so forth are laminated on the collector for the negative electrode made of a thin copper plate. Therefore, the electrodes are constituted. Moreover, a separator made of polypropylene or polyethylene and structured into a thin film having pores is sandwiched between the electrodes. In addition, a polymer gel electrolyte, such as polyacrylonitrile (PAN), polyethylene oxide (PEO) or polyvinylidene fluoride (PVDF), is enclosed in spaces among the electrodes and the separator. Thus, the polymer lithium-ion secondary battery has a sandwich structure.

The unit cell having the sandwich structure is packaged into a case serving as an encapsulating container and constituted by a thin metal film, such as aluminum foil, and a plastic film made of nylon, polyethylene, polypropylene or polyethylene terephthalate.

When the aluminum laminate pack is employed to serve as the case for the lithium-ion battery, reduction in the weight and thickness can be realized. A larger quantity of water, however, introduced into the aluminum laminate pack as compared with the conventional metal container (a battery can). Hence it follows that lithium ions are consumed owing to decomposition of water and decomposed gases and hydrofluoric acid are produced. Therefore, there arises a problem in that the capacity of the battery is reduced excessively.

When water in a quantity of 350 μg or greater per capacity (Wh) of the battery is introduced, the capacity is reduced to 80 % or smaller. Therefore, a requirement has arisen for a battery package free from reduction in the capacity, that is, with which the quantity of water which will undesirably be introduced into the battery package can be reduced to a value which is not larger than the above-mentioned value.

Disclosure of the Invention

In view of the foregoing, an object of the present invention is to provide a nonaqueous-electrolyte battery which is able to prevent introduction of water and reduction in the capacity.

To achieve the above-mentioned object, the inventors of the present invention have energetically performed investigations for a long time. As a result, a fact was detected that introduction of water is caused from diffusion of a heat-welded portion into resin. Therefore, use of heat-weld resin and reduction in the area into which water will be diffused enable the water introducing rate to be reduced to 350 μg/year or smaller per capacity (Wh). Thus, the present invention has been established.

According to one aspect of the present invention, there is provided a nonaqueous-electrolyte battery comprising: a case constituted by laminated films; and a unit cell which is accommodated in the case and having a structure that the peripheries of the case is sealed with heat wherein

when an assumption is made that the quantity of water capable of penetrating a heat-weld resin layer which is the innermost layer of the case having a thickness of T (μm) is R (g/m$^2 \cdot$ day), the cross sectional area of resin in a heat-sealed portion is S (cm²), an average width of the heat-sealed portion is W (cm) and the capacity of the unit cell is C (Wh), the following relationship is satisfied:

$$(T \times R \times S)/(W \times C) \leq 0.96 \ \mu g/Wh \cdot day.$$

When the foregoing setting is employed, the water introducing rate can be reduced to 350 μg/year per capacity (Wh). As a result, consumption of lithium ions and production of decomposed gases and hydrofluoric acid which take place owing to decomposition of water can be prevented, causing reduction in the capacity of the battery to be prevented.

Brief Description of Drawings

Fig. 1 is an exploded perspective view showing an example of the structure of a solid-electrolyte battery according to the present invention;

Fig. 2 is a schematic perspective view showing the example of the structure of the solid-electrolyte battery according to the present invention;

Fig. 3 is a cross sectional view showing an example of the structure of a case; and

Fig. 4 is a schematic view showing a sealed portion.

Best Mode for Carrying out the Invention

The structure of a nonaqueous-electrolyte battery according to the present invention will now be described with reference to the drawings.

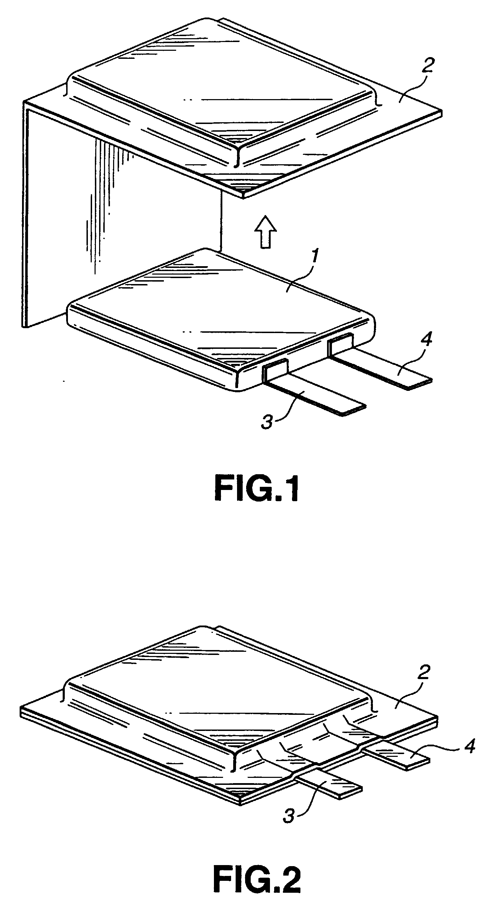

The nonaqueous-electrolyte battery according to the present invention is, for example, a solid-electrolyte battery or a gel electrolyte battery. As shown in Figs. 1 and 2, a unit cell 1 incorporates a solid electrolyte or a gel electrolyte disposed between a positive-electrode active material layer and a negative-electrode active material layer. The unit cell 1 is accommodated in a case 2 constituted by laminated films such that the periphery of the case 2 is welded with heat.

The unit cell 1 is provided with a negative-terminal lead 3 which is electrically connected to a negative electrode which constitutes the unit cell 1 and a positive-terminal lead 4 which is electrically connected to a positive electrode which constitutes the unit cell 1. The negative and positive-electrode leads 3 and 4 are drawn out to the outside portion of the case 2.

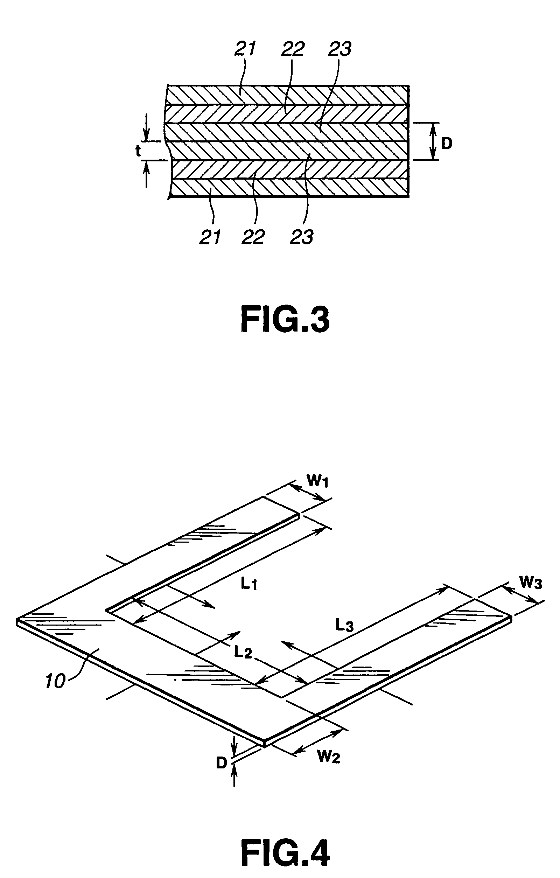

The case 2 according to the present invention, for example, as shown in Fig. 3, has a structure formed by bonding plastic films 21 and 23 to a thin metal film 22. The plastic film (the heat-weld resin layer) 23 is provided for the purpose of sealing the inside portion thereof, into which the unit cell 1 has been encapsulated, by performing heat welding. The plastic film 23 is made of polyolefine resin, such as polyethylene, polypropylene, denatured polyethylene or denatured polypropylene.

Since introduction of water is mainly caused from diffusion occurring in the resin, the present invention is structured such that the width and length of the seal and the like are optimized. The design is performed such that when an assumption is made that the quantity of water capable of penetrating a heat-welded layer which is the innermost layer of the case having a thickness of T (cm) is R (g/m² · day), the cross sectional area of resin in a heat-sealed portion is S (cm²), an average width of the heat-sealed portion is W (cm) and the capacity of the unit cell is C (Wh), the following relationship is satisfied:

$$(T \times R \times S)/(W) \times C) \leq 0.96 \ \mu g/Wh \cdot day.$$

The area S of the heat-sealed portion is determined by the distance D between metal foil members and the length L of the metal foil in the heat-welded portion of the case 2.

As shown in Fig. 3, the distance D between the metal foil members is substantially determined by the thickness t of titanate plastic film 23 which is the heat-weld resin layer. The distance D between the metal foil members varies depending on the heat welding conditions.

The length L of the sealing portion is a length $L_1 + L_2 + L_3$ of the inside portions of the sealed portion 10 which is formed by the heat-weld resin layer. Therefore, the cross sectional area S of the resin can be expressed as

follows:

$$S = D \times (L_1 + L_2 + L_3)$$

Also the width W of the heat-sealed portion is as shown in Fig. 4. When the width varies among the sealed portions, for example, an average value of $W_1$, $W_2$ and $W_3$ may be used to calculate the width W.

The quantity of water which will be introduced into the pack substantially depends on the cross sectional area of the heat-weld resin exposed to the atmosphere and the width of the seal. Therefore, a battery container is structured such that resin of a type having a moistureproofing characteristic is employed as the resin in the sealed portion which is the major portion through which moisture is introduced. Moreover, the area of the end surface is minimized and the thickness of the container is reduced. When the foregoing structure is employed, introduction of moisture can be prevented.

The foregoing value of $(T \times R \times S)/(W \times C)$ is a value indicating the quantity of water which penetrates the resin per unit capacity and unit time (day). The material, thickness and the width of the seal are determined to make the value to be 0.96 µg/Wh • day (= 350 µg/Wh • year). Thus, the water introducing rate can be made to be 350 µg/year per the capacity of 1 Wh of the battery. Therefore, a lithium-ion secondary battery can be provided which is capable of realizing a capacity retention ratio of 80 % or higher after a lapse of one year, that is, exhibiting excellent moisutureproofing characteristics and capable of significantly preventing reduction in the capacity.

In consideration of the sealing characteristics required for the sealing portion, it is preferable that the distance D between the metal foil portions is 20 µm to 200 µm. It is preferable that the width W of the seal is 2 mm or longer.

When the battery element 1 is a solid electrolyte battery or a gel electrolyte battery, a polymer material for preparing the solid polymer electrolyte may be any one of the following materials: silicon gel, acrylic gel, acrylonitrile gel, polyphosphagen denatured polymer, polyethylene oxide, polypropylene oxide, their composite polymer, crosslinked polymer, denatured polymer, fluorine polymer, for example, poly (vinylidene fluoride), poly (vinylidene fluoride-co-hexafluoropolypropylene), poly (vinylidenefluoride-co-tetrafluoroethylene) and poly (vinylidenefluoride-co-trifluoroethyelene). Also a mixed material of the foregoing materials may be employed. As a matter of course, the polymer material is not limited to the foregoing material.

A method of obtaining the solid electrolyte or the gel electrolyte laminated on the positive-electrode active material layer or the negative-electrode active material layer will now be described. Solution is prepared which is composed of a polymer compound, salt of electrolyte and solvent (and a plasticizer in a case of the gel electrolyte). Then, positive-electrode active material layer or the negative-electrode active material layer is impregnated with the foregoing solution. Then, the solvent is removed so that a solid electrolyte is obtained. The positive-electrode active material layer or the negative-electrode active material layer is impregnated with a portion of the solid electrolyte laminated on the positive-electrode active material layer or the negative-electrode active material layer so that the foregoing electrolyte is solidified. When the crosslinking type material is employed, light or heat is used to realize crosslinking so that a solid material is obtained.

The gel electrolyte is composed of the plasticizer containing lithium salt and a matrix polymer in a quantity not less than 2 wt% nor more than 30 wt%. To obtain the gel electrolyte, ester, ether or carbonic ester may solely be employed or as one of the components of the plasticizer.

The matrix polymer for gelling the carbonic ester in the process for preparing the gel electrolyte may be any one of polymers for use to constitute the gel electrolyte. From a viewpoint of stability of oxidation and reduction, it is preferable that fluorine polymer, for example, poly (vinylidenefluororide) or poly (vinylidenefluoride-co-hexafluoropolypropylene), is employed.

The solid polymer electrolyte is composed of lithium salt and the polymer compound for dissolving the lithium salt. The polymer compound may be any one of the following materials: ether polymer such as poly (ethylene oxide) or its crosslinked material or fluorine type polymer such as poly (methacrylate) ester, acrylate, poly (vinylidenefluoride) and poly (vinylidenefluoride-co-hexafluoropolypropylene). The foregoing material may be employed solely or the materials may be mixed. From a viewpoint of the stability of oxidation and reduction, it is preferable that the fluorine polymer, such as poly (vinylidenefluoride) or poly (vinylidenefluoride-co-hexafluoropolypropylene), is employed.

The lithium salt which is contained in the gel electrolyte or the polymer solid electrolyte may be lithium salt for use in a usual electrolytic solution of a battery. The lithium compound (salt) is exemplified by the following materials. Note that the present invention is not limited to the following materials.

The lithium compound (salt) is exemplified by: lithium chloride, lithium bromide, lithium iodide, lithium chlorate, lithium perchlorate, lithium bromate, lithium iodate, lithium nitrate, lithium tetrafluoroborate, lithium hexafluorophosphate, lithium acetate, his (trifluoromethanesulfonyl) imidolithium, $LiAsF_6$, $LiCF_3SO_3$, $LiC(SO_2CF_3)_3$, $LiAlCl_4$ or $LiSiF_6$.

The foregoing lithium compound may be employed solely or a plurality of the lithium compounds may be mixed. It is preferable that $LiPF_6$ or $LiBF_4$ is employed from a viewpoint of stability of oxidation and reduction.

The lithium salt is dissolved at a concentration of 0.1 mol to 3.0 mol in the plasticizer in a case of the gel electrolyte, preferably 0.5 mol/litter to 2.0 mol/litter.

The battery according to the present invention can be constituted by a method similar to a method for constituting a conventional lithium ion battery except for the structure of the present invention in which the foregoing gel electrolyte or the solid electrolyte is employed.

The material of the negative electrode of the lithium ion battery may be a material which is able to dope/dedope lithium. The foregoing material of the negative electrode may be a carbon material, such as non-graphitizing carbon or a graphite material. Specifically, any one of the following carbon materials may be employed: pyrocarbon; cokes (pitch cokes, needle cokes or petroleum cokes); graphite; vitreous carbon, a sintered compact of an organic polymer compound (a material obtained by sintering phenol resin or furan resin at a proper temperature so as to be carbonized); carbon fiber and active carbon. As an alternative to this, the material which is able to dope/dedope lithium may be a polymer material, such as polyacetylene or polypyrrole, or oxide, such as $SnO_2$. When the negative electrode is manufactured from any one of the foregoing material, a known binder and the like may be added.

The positive electrode may be manufactured by using metal oxide, metal sulfide or a specific polymer to correspond to the type of the required battery. When the lithium ion battery is manufactured, the active material of the positive electrode may be any one of the following materials: metal sulfide or oxide which does not contain lithium, for example, $TiS_2$, $MoS_2$, $NbSe_2$ or $V_2O_5$; or composite lithium oxide mainly composed of $Li_xMO_2$ (where M is one or more types of transition metal and x which varies depending on the state of charge/discharge of the battery is usually not less than 0.05 nor more than 1.10). It is preferable that the transition metal M which constitutes the composite lithium oxide is Co, Ni, Mn or the like. The composite lithimn oxide is exemplified by $LiCoO_2$, $LiNiO_2$, $LiNi_yCo_{1-y}O_2$ (where $0 < y < 1$) and $LiMn_2O_4$. The foregoing composite lithium oxide is an active material for the positive electrode which is capable of generating high voltage and which exhibits a satisfactory energy density. Plural types of the foregoing active materials may be contained in the positive electrode. When the active material is employed to manufacture the positive electrode, a known conductive material and a binder may be added.

Examples and comparative examples of the present invention will now be described on the basis of results of experiments.


Example 1


The negative electrode was manufactured as follows.

Ninety parts by weight of graphite powder obtained by pulverization and 10 parts by weight of poly (vinylidene fluororide-co-hexafloropropylene) serving as a binder were mixed so that a negative-electrode mix was prepared. Then, the negative-electrode mix was dispersed in N-methyl-2-pyrrolidone so as to be slurried. The slurry was uniformly applied to either side of elongated copper foil having a thickness of 10 μm and serving as a collector for the negative electrode. Then, the applied side was dried, and then the structure was compressed and molded by a roll pressing machine. Then, a 52 mm × 320 mm portion was obtained by cutting.

On the other hand, the positive electrode was manufactured as follows.

To obtain the positive-electrode active material ($LiCoO_2$), lithium carbonate and cobalt carbonate were mixed at a molar ratio 0.5:1. Then, the mixture was baked at 900°C in the air for 5 hours. Then, 91 parts by weight of obtained $LiCoO_2$, 6 parts by weight of graphite serving as a conductor and 10 parts by weight of poly (vinylidene fluororide-co-hexafloropropylene) serving as a binder were mixed with one another. Thus, a positive-electrode mix was prepared. The positive-electrode mix was dispersed in N-methyl-2-pyrrolidone so as to be slurried. The slurry was uniformly applied to either side of elongated aluminum foil which was a collector for the positive electrode and having a thickness of 20 μm. Then, the applied side was dried, and then the structure was compressed and molded by a roll pressing machine. Then, a 50 mm × 300 mm portion was obtained by cutting.

The gel electrolyte was obtained as follows.

The negative electrode and the positive electrode were uniformly coated and impregnated with solution prepared by mixing and dissolving 10 parts by weight of poly (vinylidene fluororide-co-hexafloropropylene) having a weight average molecular weight Mw of 600,000 and 60 parts by weight of dimethyl carbonate in a plasticizer composed of 42.5 parts by weight of ethylene carbonate (EC), 42.5 parts by weight of propylene carbonate (PC) and 15 parts by weight of $LiPF_6$. Then, the negative and positive electrodes were allowed to stand at room temperature for 8 hours to vaporize and remove dimethyl carbonate. Thus, the gel electrolyte was obtained.

The negative and positive electrodes each of which was coated with the sol electrolyte and which had the gel electrolyte film by vaporizing the solvent were placed opposite to each other and wound flat so that unit cell having a capacity of 2 Wh was manufactured.

The unit cell was sealed in a laminate sheet having size of 7 cm × 14 cm and incorporating the heat weld resin which was a high-density polyethylene (moisture vapor permeability of 20 g/m$^2$ • day when the thickness T was 20 μm) having a thickness of 100 μm. The laminate sheet was folded back into the lengthwise direction such that the heat weld resin was disposed on the inside. Then, the three sides were vacuum-sealed to create a cell accommodating portion having a size of 4 cm × 4 cm. Therefore, the sealing length of one side was 4 cm, the number of the sides was three and the total sealing length was 12 cm.

A resin member was applied to the electrode terminal at a position at which the terminal intersects the heat weld portion of the casing film. Thus, occurrence of short circuit caused from burrs or the like can be prevented. Moreover, the adhesive properties between the terminal and the laminate film were improved.

The sealing process was performed under conditions that the temperature was 200°C, the duration was 5 seconds and the sealing width was 5 mm. The distance D between metal foil members was 200 μm or shorter. Then, the pack was preserved for one year in an environment in which the temperature was 23 °C and the humidity was 55 %. The changes in the capacity of the battery and the quantity of the moisture content were measured by a Karl Fischer technique.

Example 2

A battery was manufactured similarly to Example 1 except for the conditions according to Example 1 which were changed such that the thickness of the high-density polyethylene was 40 μm and the sealing process was performed such that the distance D between the metal foil members which was 70 μm. Then, the manufactured battery was evaluated.

Example 3

A battery was manufactured similarly to Example 1 except for the conditions according to Example 1 which were changed such that the thickness of the high-density polyethylene was 15 μm and the sealing process was performed such that the distance D between the metal foil members which was 20 μm. Then, the manufactured battery was evaluated.

Example 4

A battery was manufactured by a method similar to the method according to Example 2 except for the conditions according to Example 2 which were changed such that width of the seal was 0.3 cm. The manufactured battery was evaluated.

Example 5

A battery was manufactured by a method similar to the method according to Example 2 except for the conditions according to Example 2 which were changed such that width of the seal was 0.2 cm. The manufactured battery was evaluated.

Comparative Example 1

A battery was manufactured similarly to Example 1 except for the conditions according to Example 1 which were changed such that the thickness of the high-density polyethylene was 120 μm and the sealing process was performed such that the distance D between the metal foil members which was more than 200 μm. Then, the manufactured battery was evaluated.

Comparative Example 2

A battery was manufactured similarly to Example 1 except for the conditions according to Example 1 which were changed such that the thickness of the high-density polyethylene was 10 μm and the sealing process was performed such that the distance D between the metal foil members which was less than 20 μm. Then, the manufactured battery was evaluated.

Comparative Example 3

A battery was manufactured by a method similar to the method according to Example 1 except for low-density polyethylene (having a rate of penetration of moisture of 30 $g/m^2 \cdot day$ per thickness T of 20 μm) which was employed as a substitute for the high-density polyethylene. The manufactured battery was evaluated.

Comparative Example 4

A battery was manufactured by a method similar to the method according to Example 3 except for the width of the seal which was 1.5 mm in this example. The manufactured battery was evaluated.

Results of the evaluation of the samples were shown in Table 1.

Table 1

|  | heat weld resin | thickness of heat weld resin ($\mu$m) | distance between metal foil portions D ($\mu$m) | width of the seal W (cm) |
|---|---|---|---|---|
| Example 1 | high-density polyethylene | 100 | 184 | 0.5 |
| Example 2 | high-density polyethylene | 40 | 70 | 0.5 |
| Example 3 | high-density polyethylene | 15 | 21 | 0.5 |
| Example 4 | high-density polyethylene | 40 | 70 | 0.3 |
| Example 5 | high-density polyethylene | 40 | 70 | 0.2 |
| Comparative Example 1 | high-density polyethylene | 120 | 211 | 0.5 |
| Comparative Example 2 | high-density polyethylene | 10 | 15 | 0.5 |
| Comparative Example 3 | low-density polyethylene | 100 | 184 | 0.5 |
| Comparative Example 4 | high-density polyethylene | 15 | 21 | 0.15 |

|  | capacity retention ratio after standing (%) | introduced water ($\mu$g/Wh) | $T \times R \times S / (W \times C)$ ($\mu$g/Wh·day) |
|---|---|---|---|
| Example 1 | 87 | 293 | 0.88 |

| | | | |
|---|---|---|---|
| Example 2 | 91 | 112 | 0.34 |
| Example 3 | 95 | 33 | 0.10 |
| Example 4 | 92 | 186 | 0.56 |
| Example 5 | 88 | 279 | 0.84 |
| Comparative Example 1 | 72 | 336 | 1.01 |
| Comparative Example 2 | 61 | 966 | 0.07 |
| Comparative Example 3 | 65 | 440 | 1.32 |
| Comparative Example 4 | 58 | 1089 | 0.34 |

The quantity of introduced water substantially depended on the moisture penetration characteristics of the resin in the heat-welded portion and the width of the seal. Comparative Example 1 incorporated the resin having a cross sectional area larger than that in Example 1 and the value of $(T \times R \times S)/(W \times C)$ which was larger than 0.96 µg/Wh • day. Therefore, the capacity of Comparative Example was reduced considerably. Examples 2 and 3 having the reduced cross sectional area was able to efficiently prevent reduction in the capacity. In Comparative Example 3, the thickness of the sealing resin was a small value of 10 µm. Therefore, a satisfactory sealing characteristic could not be maintained. Although the design was performed such that the foregoing value was 0.96 µg/Wh • day or smaller, water in a large quantity was introduced and, therefore, the battery deteriorated. As for the width of the seal, Comparative Example 4 arranged to have the width of 1.5 mm could not maintain satisfactory sealing characteristics. Therefore, water in a large quantity was introduced. Hence it follows that the thickness of the sealing resin must be 20 µm to 200 µm and the width of the seal must be 2 mm or larger.

As can be understood from the foregoing description, according to the present invention, a nonaqueous-electrolyte battery which is able to prevent introduction of water and reduction in the capacity can be provided.

Although the invention has been described in its preferred form and structure with a certain degree of particularity, it is understood that the present disclosure of the preferred form can be changed in the details of construction and in the combination and arrangement of parts without departing from the spirit and the scope of the invention as hereinafter claimed.

## Claims

1. A nonaqueous-electrolyte battery comprising:

    a case constituted by laminated films; and

    a unit cell which is accommodated in said case and having a structure that the peripheries of said case is sealed with heat, wherein

    when an assumption is made that the quantity of water capable of penetrating a heat-weld resin layer which is the innermost layer of said case having a thickness of T (µm) is R (g/m$^2$ • day), the cross sectional area of resin in a heat-sealed portion is S (cm$^2$), an average width of said heat-sealed portion is W (cm) and the capacity of said unit cell is C (Wh), the following relationship is satisfied:

$$(T \times R \times S)/(W \times C) \leq 0.96 \ \mu g/Wh \cdot day.$$

2. A nonaqueous-electrolyte battery according to claim 1, wherein distance D between metal foil portions of said case which has been sealed with heat is 20 $\mu$m to 200 $\mu$m.

3. A nonaqueous-electrolyte battery according to claim 1, wherein the average width W of said portion sealed with heat is 2 mm or longer.

4. A nonaqueous-electrolyte battery according to claim 1, wherein the resin constituting said heat-weld resin layer is polyolefine resin.

5. A nonaqueous-electrolyte battery according to claim 4, wherein said polyolefine resin is at least one type of materials selected from polypropylene, polyethylene, denatured polypropylene and denatured polyethylene.

6. A nonaqueous-electrolyte battery according to claim 1, wherein said heat-weld resin layer is composed of a plurality of layers.

7. A nonaqueous-electrolyte battery according to claim 1, wherein said unit cell is constituted by an electrolyte which is a gel electrolyte or a solid electrolyte containing matrix polymer and lithium salt.

8. A nonaqueous-electrolyte battery according to claim 1, wherein a negative electrode which constitutes said unit cell is a negative electrode containing a material which is capable of doping/dedoping lithium.

9. A nonaqueous-electrolyte battery according to claim 8, wherein said material which is capable of doping/dedoping lithium is a carbon material.

10. A nonaqueous-electrolyte battery according to claim 1, wherein a positive electrode which constitutes said unit cell is a positive electrode containing a composite oxide of lithium and transition metal.

FIG.1

FIG.2

**FIG.3**

**FIG.4**

# INTERNATIONAL SEARCH REPORT

| International application No. |
| --- |
| PCT/JP99/05799 |

| A. CLASSIFICATION OF SUBJECT MATTER |
| --- |
| Int.Cl⁷ H01M2/02, 2/08, 10/40 |

According to International Patent Classification (IPC) or to both national classification and IPC

| B. FIELDS SEARCHED |
| --- |
| Minimum documentation searched (classification system followed by classification symbols)<br> Int.Cl⁷ H01M2/02, 2/08, 10/40 |

Documentation searched other than minimum documentation to the extent that such documents are included in the fields searched

| Jitsuyo Shinan Koho | 1926-1996 | Jitsuyo Shinan Toroku Koho | 1996-1999 |
| Kokai Jitsuyo Shinan Koho | 1971-1999 | Toroku Jitsuyo Shinan Koho | 1994-1999 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| P,A | JP, 11-102675, A (YUASA CORPORATION),<br>13 April, 1999 (13.04.99) (Family: none) | 1-10 |
| A | JP, 9-63550, A (Sony Corporation),<br>07 March, 1997 (07.03.97) (Family: none) | 1-10 |
| A | JP, 10-157008, A (Teijin Limited),<br>16 June, 1998 (16.06.98) (Family: none) | 1-10 |

| ☐ Further documents are listed in the continuation of Box C. | ☐ See patent family annex. |
| --- | --- |

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br> 24 December, 1999 (24.12.99) | Date of mailing of the international search report<br> 11 January, 2000 (11.01.00) |
| --- | --- |
| Name and mailing address of the ISA/<br> Japanese Patent Office | Authorized officer |
| Facsimile No. | Telephone No. |

Form PCT/ISA/210 (second sheet) (July 1992)